# EUROPEAN PATENT APPLICATION

(11) **EP 0 918 274 A2**
(43) Date of publication of application: **26.05.1999**
(21) Application number: 98111460.6
(22) Date of filing: 22.06.1998
(51) Int. Cl.: G06F 1/00

(54) **System and method for securing and validating data using signatures, encryption, and feedback**

(30) Priority: 13.11.1997 US 969094
(71) Applicant: Hewlett-Packard Company, Palo Alto, California 94304 (US)
(72) Inventor: McCollom, William Girard, Ford Collins, CO 80525 (US)
(74) Representative: Schoppe, Fritz, Dipl.-Ing.

(57) **Abstract**

A system and method for generating a fingerprint of a data signal that combines signature generation, encryption, and preferably random number feedback, which may be employed both to secure data, and to validate secured data to ensure that the data has not been tampered with by unauthorized users. The system generates a fingerprint of a data signal (DATA_IN) which comprises one or more data components (〈DATA_1〉···〈DATA_M〉). A first level signature generator (202, 604) receives and generates a signature on at least one of the data components to produce a first level signature. A first signal combiner (204, 608) receives and combines a second set of the data components and the first level signature into a combined signal. A data encryptor (206, 610) receives the combined signal and generates an encrypted signal. A second level signature generator (208, 612) receives the encrypted signal and generates the fingerprint. The system may include at least one other first level signature generator (606) which receives and generates a signature on a third set of data components to produce at least one other first level signature, such that the first signal combiner (608) also receives and combines the additional first level signature into the combined signal. A random number generator (602) which generates a random number for use by at least one portion (604, 606, 608, 610, 614) of the system may be included to introduce randomness into the fingerprint. The system may also include an encoder (614) which encodes the random number or a signature of the random number into the fingerprint. The random number may also be used in generating the first level signature or the combined signal.

## Description

### Field of the Invention

The present invention relates generally to the field of data security, and more particularly to a system and method for securing data using signatures, encryption, and feedback.

### Background of the Invention

Providing security for data is important in applications which require that only authorized users modify particular data. Example applications where security may be required include applications involving confidential client records (e.g., medical, bank account, and personnel records), data or configuration files shipped with software by software manufacturers for use only by licensed users, and in analog signal authentication.

One present day technique for securing data is known as "fingerprinting". Fingerprints, or "signatures", are generated by passing the data through a signature algorithm. The signature algorithm may be as simple as a checksum generator, or may be much more sophisticated. A common feature of signature generation is that a given signature algorithm will always produce an identical signature when fed identical data. Signature algorithms are commonly employed in validating data because they provide a simple method of determining whether the data has been corrupted. One example of a common signature application may be found in the software industry. Often, a digital file produced by software manufacturer will be run through a signature algorithm to generate a signature on the contents of the file. The signature may be generated on a line by line basis, on the entire file, or in various other formats. Typically the signature is appended to the end of each line, or the end of the file, or in some appropriate location according to the specified format. The signed file may then be shipped with the product. At startup of the application, or when the file is to be used, the software will typically include file validation means, which includes the signature algorithm. The file validation means is configured to regenerate each of the signatures based on the appropriate data in the file, and ensure that each regenerated fingerprint matches each fingerprint located in the file before proceeding. If the regenerated fingerprint does not match the file fingerprint, it is assumed that the data has been corrupted. The signature algorithm has been effectively used throughout the software industry to detect corrupted data. However, one limitation of the use of signature algorithms is that once the signature algorithm is known, a valid fingerprint may be generated on the data at any time. Accordingly, if a user modifies the data and knows the signature algorithm, the user may generate a new valid signature on the modified data and replace the original signature with the new valid signature. Thus, when validating the modified data, the signature algorithm will regenerate the new valid signature and interpret the data as being valid. Accordingly, fingerprinting based solely on signature algorithms are unable to detect that the data has been modified.

One data security technique that has received a lot of attention is known as "encryption". Encryption techniques are much more sophisticated than signature algorithm techniques in that they typically require a cipher key to both encode and decode the data. Accordingly, even if the encryption algorithm is known, the encrypted data cannot be decoded or regenerated without the proper cipher key. Encryption may therefore be more effective in securing data and preventing unauthorized users from modifying the data. However, the use of encryption techniques is limited by U. S. Export Control Regulations. However, when encryption techniques are used only to encode, and not to decode, the technology is less tightly controlled.

It is clear from the above discussion that a need exists for an alternative fingerprinting technique which may be used for detecting not only that the data itself is valid, but also that the data has not been modified by an unauthorized user. Such a technique is required in applications where it is critical to allow only authorized users to modify the data.

### Summary of the Invention

In accordance with the invention, a system and method are described herein for generating a fingerprint of a data signal that includes one or more components. The technique for generating the fingerprint combines signature generation, encryption, and preferably random number feedback, which hinders the ability of an unauthorized user to reverse engineer the process of generating a valid fingerprint. The invention may therefore be employed both to secure data, and to validate secured data to ensure that the data has not been tampered with by unauthorized users.

In one embodiment, a first level signature is generated on at least one of the data components. The first level signature is then combined with one or more of the data components, and the combination is then encrypted. A second level signature is then generated on the encrypted signal to produce the fingerprint. A random number may be generated. The combination signal may then include the random number and or a first level signature of the random number to introduce additional security. The random number may also be combined with the encrypted signal such that the fingerprint includes the random number. In one embodiment, an encryption algorithm which is used to generate the encrypted signal may be initialized with a known seed, preferably supplied by the user. Where the fingerprint includes the random number, the random number may be used as a feedback mechanism to reseed the encryption algorithm for the next input data signal and to thereby allow the order of the received data signals to be validated. To validate secured data, the process is repeated on the data portion of the secured data to regenerate a fingerprint. The regenerated fingerprint may be compared to the fingerprint portion of the secured data to determine whether or not the fingerprints match. Matching fingerprints indicate that the data is valid and that it has not been tampered with. A mismatch of the fingerprints indicate that the data is corrupt or has been tampered with.

An apparatus in accordance with the invention includes at least one first level signature generator which receives and generates a digital signature on at least one of the data components. A signal combiner is provided to combine one or more of the data components and at least one first level digital signature into a combined signal. A data encryptor generates an encrypted signal from the combined signal. A second level signature generator generates a signature on the encrypted signal, which is output as the fingerprint. A random number generator may also be provided to generate a random number for input to one or more of the first level signature generators and or to the signal combiner to be included in the combined signal. A second signal combiner may be included to combine the random number with the fingerprint to allow the random number to be extracted from the fingerprint for validation purposes. The random number may be used to seed the data encryptor for generating the next encrypted signal. When used in this manner, the inclusion of a random number in the fingerprint allows the order of the received signals to be validated as well.

### Brief Descriptions of the Drawings

The objects and advantages of the invention will become more apparent and more readily appreciated from the following detailed description of the presently preferred exemplary embodiment of the invention taken in conjunction with the accompanying drawing, of which:
FIG. 1 is a flowchart of a method in accordance with the invention;
FIG. 2 is a block diagram of a system in accordance with the invention;
FIG. 3 is an example digital file comprising lines of data which are to be secured used herein for illustrative purposes;
FIG. 4 is an example output file generated on the example digital file of FIG. 3, used herein for illustrative purposes;
FIG. 5 is a flowchart of an alternative embodiment of a method in accordance with the invention;
FIG. 6 is a block diagram of a system in accordance with the embodiment of FIG. 5; and
FIG. 7 is an example digital file generated the example digital file of FIG. 3 using the system of FIG. 6.

### Detailed Description of the Present Invention

A mechanism for securing data is described herein which may be used to prevent unauthorized users from tampering with the secured data. In accordance with the invention, the data to be secured is combined with digital signatures of the data to be secured. The combination is then encrypted and a digital signature is then obtained on the encrypted combination. In a preferred embodiment, a random number which is known or may be derived by authorized users is introduced to seed the encryptor. Further in accordance with the invention, the order of an entire data file may be secured by generating a random number which is to be used when validating the next received data signal and encoding it into the fingerprint of the current data signal that is generated. As a further enhancement, the random number and a digital signature of the random number may be combined with the data to be secured and its digital signatures before being encrypted. The invention may be used in any application which requires data security or where it is desired to ensure that the data has not been subject to end-user tampering. The invention may be used both to secure the data and also to validate the data. In this regard, secured data may be validated by regenerating the fingerprint for each data signal and comparing the regenerated fingerprint to the previously generated fingerprint accompanying the secured data signal. A mismatch between the regenerated fingerprint and the previously generated fingerprint indicates that the data has been modified.

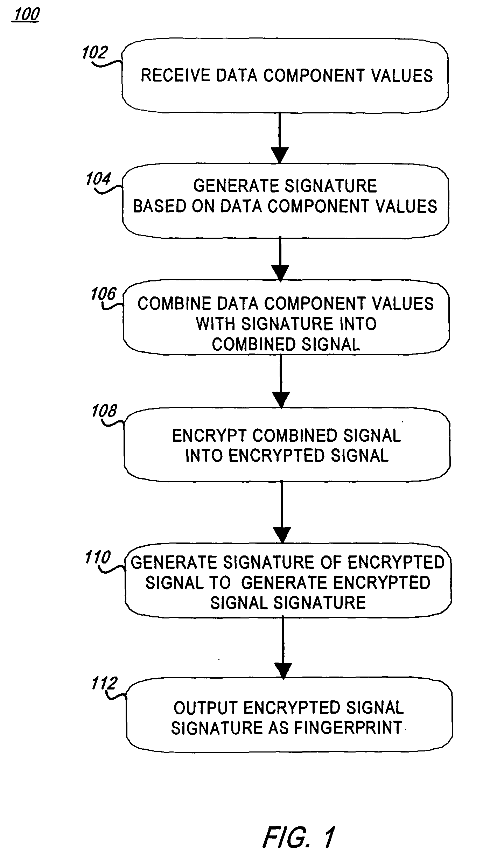

FIG. 1 is a flowchart of a method in accordance with the invention. In the embodiment of FIG. 1, the method operates to receive a data signal comprising one or more data components, and to generate a secure fingerprint on the data signal. In accordance with the invention, the method, shown at 100, begins in step 102 by receiving the values of the data components of the data signal. In a digital system, the data components may be one or more elements of a digital parameter. In an analog system, the data components may be different frequency components of a sinusoidal signal. Once the data components are received, a signature is generated in step 104 on one or more of the data components. The signatures of the one or more data components are then combined with one or more of the actual data component values in step 106 to generate a combined signal. In step 108, the combined signal is then encrypted using any suitable encryption algorithm to generate an encrypted signal. In step 110, a signature of the encrypted signal is generated to produce an encrypted signal signature. The encrypted signal signature is then output as the fingerprint of the data signal in step 112.

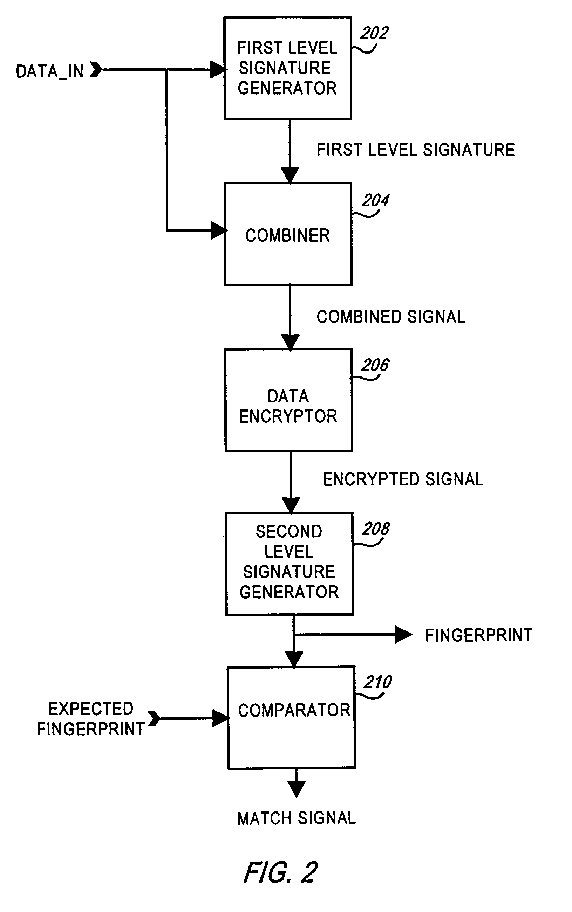

FIG. 2 illustrates a block diagram of a system in accordance with the invention. As shown, the system includes a first level generator 202, a signal combiner 204, a data encryptor 206, and a second level signature generator 208. First level signature generator 202 receives at least one component of data signal DATA_IN. In a digital system, DATA_IN will typically comprise one or more digital values in the format 〈value_1〉···〈value_n〉, where n may be any integer value greater than zero. In an analog system, DATA_IN may comprise any number of components separated into any suitable format (e.g., frequency components, or voltage or current ranges). In FIG. 2, first level signature generator 202 may be configured to utilize any or all of DATA_IN's components. First level signature generator 202 generates a first level signature on each of the components of DATA_IN that are input to it. The first level signature may be output as a single signal, comprising a combined signature of all the input DATA_IN components, or may be output as separate signature components, comprising a separate signature for each separate input DATA_IN component, or any combination thereof. The method of generating the first level signature may vary from implementation to implementation. For example, in a digital system, the first level signature generator may comprise means for implementing the popular MD5 algorithm. The MD5 algorithm is known in the art, and is described in more detail in Ronald L. Rivest, RSA Data Security, Inc., "The MD5 Message-Digest Algorithm", Internet Engineering Task Force (IETF) Network Working Group RFC #1321 (Apr., 1992). Other suitable signature algorithms which may implemented in the signature generator may also include the well-known MD3, MD4, or RIPMD-160 algorithms. The MD3 and MD4 algorithms are variations of MD5. RIPMD-160 is described in detail in Antoon Bosselaers, Hans Dobbertin, and Bart Preneel, "RIPMD-160 - Cryptographic Hash Function", Dr. Dobbs Journal (Jan. 1997).

Signal combiner 204 receives the first level signature generated by first level signature generator 202. Signal combiner may also receive one or more of the DATA_IN components as well. The particular DATA_IN components received by signal combiner 204 may be the same as, or different from, the DATA_IN components received by first level signature generator 202. The purpose of signal combiner 204 is to combine each of the first level signature components and each of the received DATA_IN components in a known manner into a combined signal. In a digital system, this may be accomplished by concatenating each of the components together to produce a digital value. In an analog system, this may be accomplished by modulating or mixing all of the components together to produce a modulated combined signal.

Data encryptor 206 receives the combined signal generated by signal combiner 204 and encrypts it to produce an encrypted signal. Encryption techniques are known in the art. For example, in a digital system, suitable encryption algorithms may include the A8 algorithm or the Tiny Encryption Algorithm (TEA), both of which are known in the art. TEA is described in detail in David Wheeler and Roger Needham, "TEA - A Tiny Encryption Algorithm", Computer Laboratory, Cambridge University (Nov., 1994). In an analog system, encryption may be achieved using signal scattering techniques.

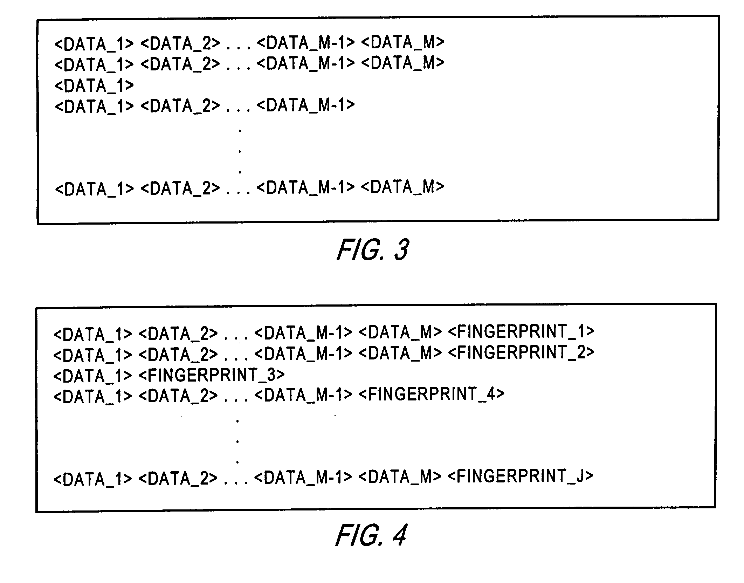

Second level signature generator 208 receives the encrypted signal generated by data encryptor 206 and generates a signature on it. In a digital system, the digital signature may be generated using the known MD5 algorithm, or any other signature generating algorithm. FIG. 3 is an example of a digital file comprising lines of data which are to be secured. In the embodiment of FIG. 3, DATA_IN includes one line of data, which may comprise 1 to M data values 〈DATA_1〉 ··· 〈DATA_M〉. Accordingly, DATA_IN may have up to M components. In the embodiment of FIG. 2, first level signature generator 202 may receive any one or more of the DATA_IN components upon which to generate the first level signature. Signal combiner 204 receives the first level signature and may receive any combination of the DATA_IN components from which it generates a combined signal. The combined signal is encrypted by data encryptor 206, and the fingerprint generated by second level signature detector. In this example, the fingerprint is appended to the line of data in an output file. Each line in the digital file of FIG. 3 is similarly fingerprinted. When each line has been fingerprinted, the output file preferably looks like the file shown in FIG. 4. Thus, each line in the secured file has a format of 〈DATA_1〉 ··· 〈DATA_M〉 〈FINGERPRINT_X〉, where X corresponds to the line number of the data in the file.

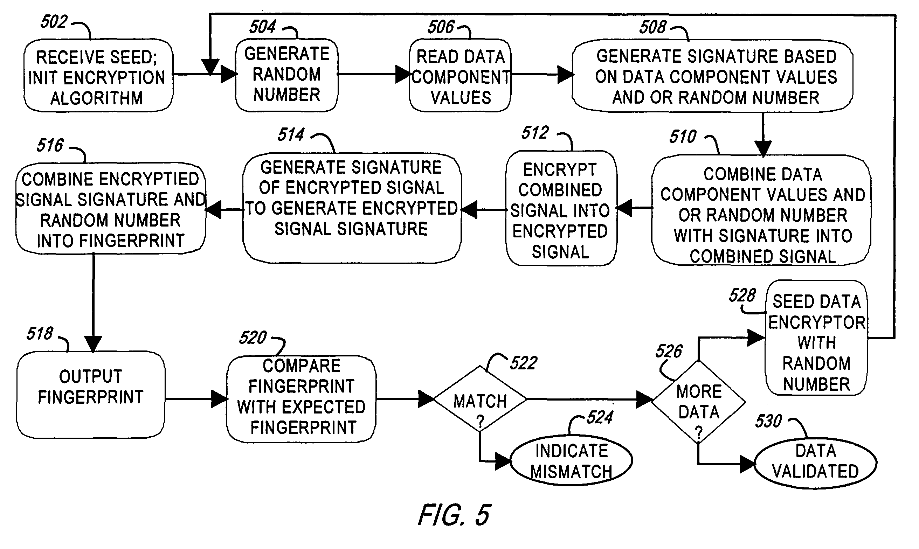

FIG. 5 is a flowchart of a method in accordance with the invention. In the embodiment of FIG. 5, the method operates to receive a data signal comprising one or more data components, and to generate a secure fingerprint on the data signal. In a preferred embodiment, the method also operates to receive an initial seed value from which the encryption algorithm is initialized. In accordance with the invention, the method, shown at 500, preferably begins in step 502 by receiving a known seed value and initializing the encryption algorithm. A random number is generated in step 504 and the data components of the data signal are received in step 506. In step 508, a signature is generated on one or more of the data components and or random number. The signatures of the one or more data components and or random number are then combined with one or more of the actual data component values and or random number in step 510 to generate a combined signal. In step 512, the combined signal is then encrypted using any suitable encryption algorithm to generate an encrypted signal. In step 514, a signature of the encrypted signal is generated to produce an encrypted signal signature. The encrypted signal signature is then preferably combined with the random number in step 516 to generate a fingerprint for the data signal. The fingerprint is output may be output in step 518.

If the data signal is being validated, the fingerprint is then compared to an expected fingerprint in step 520. If the fingerprints do not match, as determined in step 522, the mismatch is indicated in step 524. A mismatch indication signifies that the received data signal is not the same as the original data signal. If the fingerprints do match, as determined in step 522, an indication that the data signal is valid may be produced in step 530, or the process may be repeated on additional data signals. If additional data signals are to be checked, as determined in step 526, the encryptor is preferably re-seeded in step 528 with the random number generated during the current validation process before repeating steps 504 - 530 (where applicable).

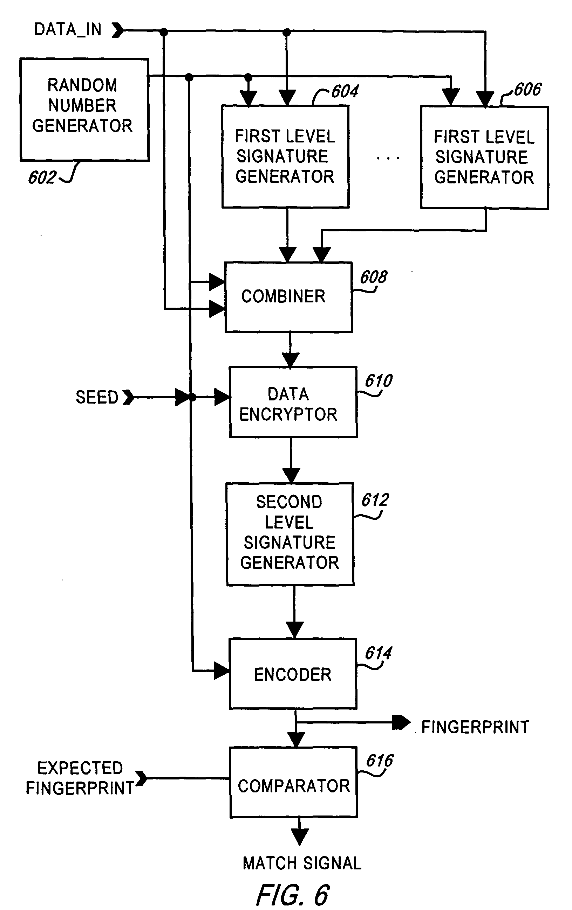

FIG. 6 illustrates a block diagram of a system in accordance with the embodiment of FIG. 5. The embodiment of FIG. 6 includes a random number generator 602. Random number generator 602 generates a random number. Random number generator 602 may be seeded with an initial value SEED_1 that will preferably be known by or made known to authorized users of the data when validation of the data is performed. Random number generators are known in the art. Accordingly any random number generator compatible with the type of system may be employed therein.

The system embodied in FIG. 6 includes one or more first level generators 604 - 606. First level signature generator 602 receives at least one component of data signal DATA_IN. In a digital system, DATA_IN will typically comprise one or more digital values in the format 〈value_1〉···〈value_n〉, where n may be any integer value greater than zero. In an analog system, DATA_IN may comprise any number of components separated into any suitable format (e.g., frequency components, or voltage or current ranges). In FIG. 6, each of first level signature generators 604 - 606 may be configured to utilize any or all of DATA_IN's components, as described previously with respect to first level signature generator 202 of FIG. 2. Furthermore, each of first level signature generators 604 - 606 may receive similar ones of, or completely different ones of, DATA_IN's components. In addition, any or all of first level signature generators 604 - 606 may receive the random number generated by random number generator 602. Also in accordance with invention, any or all of the first level signature generators 604 - 606 may be configured to receive the random number but none of the DATA_IN components. It will be clear to those skilled in the art that the number of different permutations of possible number of first level signature generators and various combinations of inputs signals to the first level signature generators are many. Accordingly, the particular embodiment for a given implementation may vary from application to application. Each first level signature generator 604 - 606 generates a first level signature on each of the components of DATA_IN and/or random number that are input to it. The first level signature may be output as a single signal, comprising a combined signature of all the input DATA_IN components and/or random number, or may be output as separate signature components, comprising a separate signature for each separate input DATA_IN component and/or random number, or any combination thereof.

Signal combiner 608 receives each of the first level signatures generated by first level signature generators 604 - 608. Signal combiner 608 may also receive one or more of the DATA_IN components and/or random number as well. Signal combiner 608 combines each of the first level signature components and each of the received DATA_IN components and/or random number in a known manner into a combined signal.

Data encryptor 610 receives the combined signal generated by signal combiner 608 and encrypts it to produce an encrypted signal. Data encryptor 610 may be seeded by a known seed SEED which is preferably known, or is capable of being known, when the data is validated. In a preferred embodiment, SEED is a key derivable from a registered license number of an authorized user. As discussed hereinafter, SEED may also be a random number that is encoded into a previously generated fingerprint.

Second level signature generator 612 receives the encrypted signal generated by data encryptor 610 and generates a signature on it to produce a second level signature. The second level signature may be utilized as the fingerprint.

Alternatively, the second level signature may be combined with the random number generated by random number generator 602 by encoder 614 to generate the fingerprint. Encoder 614 may directly combine the random number into the fingerprint (e.g., by concatenating the random number to the second level signature) or may be further encoded and then combined with the second level signature. For example, encoder 614 may generate a signature of the random number before combining it with the second level signature to generate the fingerprint.

An embodiment that combines the random number into the fingerprint may be used to provide an additional security feature of authenticating the order in which the data is received. The order in which data is received may be secured by utilizing the random number of the immediately previously generated fingerprint as the seed SEED input to data encryptor 610. Preferably data encryptor 610 generates a different encrypted signal given the same combined signal for each different seed it receives. Accordingly, during validation, which is discussed hereinafter, if the order of the received data is tampered with, an incorrect seed (i.e., the random number from the fingerprint of data which is *not supposed* to precede the current data) will be input to data encryptor 610, causing it to generate a different fingerprint of the same signal than if the seed had been correct (i.e., the random number from the fingerprint of the data which is *supposed* to precede the current data).

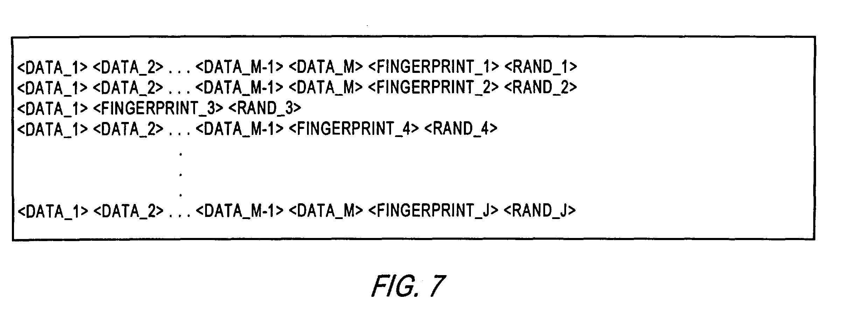

FIG. 7 is an example of a digital file containing secured data which may be generated from the example digital file of FIG. 3 using the system of FIG. 6. In the embodiment of FIG. 7, the second level signature (i.e., FINGERPRINT_Z, where Z::1···J) generated by second level signature detector is combined with the random number generated by random number generator 602, which together are appended to the line of data in an output file. Each line in the digital file of FIG. 3 is similarly fingerprinted, to produce the output file of FIG. 7. Thus, each line in the secured file has a format of 〈DATA_1〉 ··· 〈DATA_N+M〉 〈FINGERPRINT_Z〉 〈RAND_Z〉, where Z corresponds to the line number of the data in the file.

The invention may be used to validate secured data. To validate secured data, the data portion of the secured data is input to a system configured in the same manner as that used to secured the data to generate a regenerated fingerprint. The regenerated fingerprint is generated in a manner identical to the manner in which the original fingerprint was generated. The regenerated fingerprint (preferably including the random number) is then compared with the expected fingerprint (i.e., the fingerprint portion of the secured data, preferably including the random number portion) by comparator 616. Comparator 616 compares the regenerated fingerprint with the expected fingerprint and generates a match signal which indicates whether or not the regenerated fingerprint matches the expected fingerprint. A mismatch indicates that the data and/or order of the data has been modified.

When validating a data file such as that shown in FIG. 7, if the regenerated fingerprint and expected fingerprint match for the first secured line of data, the random number from the current iteration is sent to data encryptor 610 as the SEED and the next line of data in the secured data file is input to the system for validation. Each line of data is similarly validated, with the random number contained in the fingerprint of its previous line of data being used to reinitialize the data encryption algorithm in data encryptor 610. This feedback mechanism allows the order of the data in the file to also be validated. If a mismatch occurs between a regenerated fingerprint and its expected fingerprint, either the data itself or the order of the data has been modified.

It will be appreciated from the above detailed description that the invention provides a mechanism to allow data to be secured by authorized users, and to allow secured data to be validated to ensure that the data has not been corrupted or tampered with by unauthorized users. While illustrative and presently preferred embodiments of the invention have been described in detail herein, it is to be understood that the inventive concepts may be otherwise variously embodied and employed and that the appended claims are intended to be construed to include such variations except insofar as limited by the prior art.

## Claims

1. A system for generating a fingerprint of a data signal (DATA_IN), said data signal comprising one or more data components (〈DATA_1〉···〈DATA_M〉), comprising:
a first level signature generator (202, 604) which receives and generates a signature on a first set of data components to produce a first level signature, said first set of data components comprising at least one of said one or more data components (〈DATA_1〉···〈DATA_M〉);
a first signal combiner (204, 608) which receives and combines a second set of said data components and said first level signature into a combined signal;
a data encryptor (206, 610) which receives said combined signal and generates an encrypted signal;
a second level signature generator (208, 612) which receives said encrypted signal and generates said fingerprint.

2. The system of claim 1, comprising:
at least one other first level signature generator (606) which receives and generates a signature on a third set of data components to produce at least one other first level signature, said third set of data components comprising at least one of said one or more data components (〈DATA_1〉···〈DATA_M〉);
wherein said first signal combiner (608) also receives and combines said at least one other first level signature into said combined signal.

3. The system of claim 1 or 2, further comprising:
a random number generator (602) which generates a random number, said random number being employed by at least one portion (604, 606, 608, 610, 614) of said system to introduce randomness into said fingerprint.

4. The system of claim 3, comprising:
an encoder (614) which encodes said random number into said fingerprint.

5. The system of claim 4, wherein:
said encoder (614) encodes a signature of said random number into said fingerprint.

6. The system of claim 3, 4 or 5, wherein:
said first level signature is generated using said random number.

7. The system of claim 3, 4, 5 or 6, wherein:
said random number is combined into said combined signal.

8. The system of claim 3, 4, 5, 6 or 7, said data encryptor (610) receiving a seed and initializing an encryption algorithm based on said seed, said encryption algorithm implemented in said data encryptor.

9. The system of claim 8, said seed comprising a previously generated random number combined in a previously generated fingerprint.

10. The system of claim 1, 2, 3, 4, 5, 6, 7, 8 or 9, further comprising:
a comparator (210, 616) which receives and compares said fingerprint and a previously generated fingerprint, and produces a match signal indicating whether said fingerprint and said previously generated fingerprint match.
